# EUROPEAN PATENT APPLICATION

(11) **EP 4 181 349 A1**
(43) Date of publication of application: **17.05.2023**
(21) Application number: 22207203.5
(22) Date of filing: 14.11.2022
(51) Int. Cl.: H02J 7/00, H01M 10/44, H02M 7/483

(54) **SOLAR POWERED BATTERY SYSTEM WITH MULTILEVEL CONVERTER FOR TRACTION POWER NETWORKS**

(30) Priority: 15.11.2021 DE 102021129772; 19.05.2022 EP 22174334
(71) Applicant: STABL Energy GmbH, 81379 München (DE)
(72) Inventor: Singer, Arthur, 81379 München (DE)
(74) Representative: Lohr, Jöstingmeier & Partner

(57) **Abstract**

A battery storage system includes a string of battery modules, forming a multilevel converter connected to a selector switch. The selector switch comprises at least a first state in which the string is connected to a DC input which may include a solar module and a second state, in which the string is connected to an AC output, which may be a power grid. The battery storage system is configured for at least two operating modes including a DC input mode and an AC output mode. In the DC input mode, the selector switch is in its first state and the string is configured for receiving DC electrical energy with charging the battery modules. In the AC output mode, the selector switch is in its second state and the string is configured for generating an AC output with discharging the battery modules.

## Description

### Field of the invention

The invention relates to a battery storage system, where the batteries are charged by solar cells and deliver power to a power grid or traction power network such as a German railway traction power network operating at a frequency of 16,7 Hz.

### Description of the related art

Photovoltaic systems may be connected to a power grid or traction power network, into which the generated energy is fed. To perform a more uniform power delivery, battery storage systems may be used. During daylight with a high PV (Photovoltaic) system output, the battery system may be charged, while during times with a low PV system output, e.g. night, the battery system may be discharged, still delivering power. Such a system, which may provide electrical energy to a single house, is disclosed in US 2016/0134120 A, where a first inverter controls power input/output of the battery and a second inverter generates an AC line voltage.

Multilevel converters as disclosed in US 2017/0229874 A1 may be used to efficiently generate an AC line voltage from DC voltages delivered by solar cells. When directly connecting solar panels to a Multilevel converter, individual solar panels together with their wiring may have large level shifts according to the output AC Voltage with short switching times. These fast switching signals are transferred over the comparatively long lines connecting individual solar panels to the solar panels. Therefore, radiation of electromagnetic fields, causing EMI (Electromagnetic Interference) cannot be avoided. Further solar panels cannot be electromagnetically shielded to reduce EMI.

### Summary of the invention

The problem to be solved by the invention is to provide a battery storage system, where the batteries can be charged by solar cells, which has a simplified structure, a longer lifetime and better EMI characteristics. The battery storage system may provide power to traction power networks operating at 16,7 Hz.

Solutions of the problem are described in the independent claims. The dependent claims relate to further improvements of the invention.

In an embodiment, a battery storage system includes a string of batteries with switches, forming a multilevel converter. The string has a first end and a second end. A selector switch having at least two switching states is connected to the first end.

The selector switch may be a single switch, e.g. a SPDT (Single Pole Double Throw) switch which may have an input and two outputs, or two separate switches connected together with a locking circuitry to prevent switching both on at the same time. The selector switch may be configured to alternatively connect in a first switching state the string to a DC input and in a second switching state the string to an AC output.

The battery storage system may be configured for at least two operating modes: a DC input mode and an AC output mode. In the DC input mode, the selector switch is in its first state and the string may be configured for receiving DC electrical energy with charging the battery modules. In the AC output mode, the selector switch is in its second state and the string may be configured for generating an AC output with discharging the battery modules.

In an embodiment, at least one group of solar modules, including at least one solar cell is connected to the DC input. The battery storage system may include the at least one group of solar modules. The at least one solar cell may charge the string of batteries.

In a further embodiment, a traction power network is connected to the AC output. The connection may be made by means of a transformer, which may be an isolation transformer. The battery storage system may include the at least one transformer which may be an isolation transformer. The string of batteries may supply power into the traction power network. The frequency of the traction power network may be at 16,7 Hz with a tolerance of +-10%

The switch may be configured to provide an electrical connection either between the battery string and the string of solar modules or between the battery string and the AC output.

In the DC input mode, the string of battery cells with switches is connected by means of the first selector switch to the at least one solar module and may present by selecting a certain number of battery cells a voltage matching to the output capabilities of the solar modules. This voltage may be dependent on the energy received by the solar modules and therefore by the solar radiation received by the modules. By adapting the number of batteries and therefore the voltage at the string of batteries, an MPP tracking (Maximum Power Point tracking) may be implemented. With such an MPP tracking, the solar modules are operated at an operating point where they have the maximum power output.

Instead or in addition to solar modules other energy sources and specifically renewable energy sources which often do not provide changing output power, may be used. Further, energy sources, like fuel cells may be used which need battery buffering for peak loads.

In the AC output mode, the string of batteries is connected via the first selector switch to a load which may include a load transformer. Here, the switches of the string of batteries may be controlled in such a sequence that by selecting different numbers of batteries, a sinusoidal output voltage is generated.

In these embodiments, the solar powered battery storage system can either be charged or it can be discharged. It is not possible to deliver electrical power from the solar modules directly to the load, as the solar modules provide a DC current whereas the load requires an AC current. Here, the string of batteries with switches is used as a variable load for the solar cells and as a variable 4-quadrant voltage source for generating an AC voltage for the load. This eliminates the needs for further inverters and keeps the requirement on electronic devices and components low. The switches in the string of battery may also provide an active balancing of the batteries by actively selecting batteries with a higher state of charge (SOC) with longer on-times compared to batteries with a lower state of charge.

In an embodiment, multiple strings of batteries together with first selector switches may be connected in parallel, such that for example one string of batteries is being charged by connecting solar cells whereas another string of batteries is providing power to the load. The strings of batteries may be configured to cycle between DC input mode and AC output mode alternatingly, such that always at least one string of batteries is in DC input mode and charging the string of batteries, and at least one string of batteries is in AC output mode and discharging the string of batteries. This may provide a continuous power transfer from the DC input to the AC output. There may also be a plurality of such strings of batteries together with first selector switches being connected in parallel to provide a dynamic configuration dependent on the availability of solar power and/or load requirements. If, for example, a high solar power is available, multiple strings of batteries may be charged whereas during times of high load requirements, a higher number of strings of batteries may be connected in parallel for providing power to the load.

In an embodiment, the string of battery modules is connected with a first end to the selector switch and with a second end to a secondary selector switch. The selector switch and the secondary selector switch are synchronized, such that they either both connect the string to the DC input or to the AC output. This switch configuration provides a full isolation between the AC output and the DC input. Any of the switches may be a semiconductor switch, but a relay may be preferred to obtain galvanic isolation.

In an embodiment, the battery storage system may be configured for a third operating mode, herein called the AC input mode. In the AC input mode, the selector switch is in its second state and the string is configured for receiving AC electrical energy from the AC output and charging the battery modules. Therefore, the battery may be charged from the traction network. When a train is decelerating, the excess electrical energy generated may be stored in the battery modules.

Further, a fourth operating mode, the DC output mode may be provided, in which a voltage may be applied at the DC input e.g. for testing and/or heating the solar panels.

In an embodiment, at least one or each of the battery modules includes at least a battery and at least a series switch and a parallel switch.

In an embodiment, at least one of or each of the battery modules includes at least means being configurable for at least:
- a connected state, wherein a battery is connected in series with at least one other battery. In this state, the at least one series switch may be closed and the at least one parallel switch may be closed.
- a bypass state, wherein the battery is bypassed. In this state, the at least one series switch is open and the at least one parallel switch is closed.
- an optional open state wherein the battery module has an open connection. In this state, the at least one series switch and the at least one parallel switch are open.

The at least one battery module may include at least one further switch. The switches of the at least one battery module may be further configured for at least one of parallel switching of battery cells or battery modules or polarity reversal of battery cells.

In an embodiment, the battery storage system may be configured to transfer energy between different power networks in any direction. In an embodiment, the input side may be coupled to a first network, which may be any AC or DC power network.

A method relates to operating a battery storage system having a string of battery modules, forming a multilevel converter, and being connected to a selector switch.

The method includes the steps of:
In a DC input mode, the selector switch connects the string of battery modules to a DC input, and the string of battery modules is receiving DC electrical energy with charging the battery modules;
in an AC output mode, the selector switch connects the string of battery modules to an AC output, and the string of battery modules is generating an AC output with discharging the battery modules.
In a continuous mode, alternatingly,
   a) at least one first string of battery modules with a first selector switch is in the DC input mode and at least one second string with a second selector switch is in the AC output mode, and
   b) at least one first string of battery modules with a first selector switch is in the AC output mode and at least one second string of battery modules with a second selector switch is in the DC input mode.

Exemplarily, with two strings, there may be a first string charge mode which may be operating the first string of battery modules and a first selector switch in the DC input mode, while operating a second string of battery modules and a second selector switch in the AC output mode. A second string charge mode may be operating the first string of battery modules and the first selector switch in the AC output mode, while operating the second string of battery modules and the second selector switch in the DC input mode.

This cycle may be repeated multiple times. In this continuous mode alternatingly one string is charged while the other is discharged, providing a continuous power transfer from the DC input to the AC output.

If the selector switch is a comparatively slow switch, e.g. a relay, there must be a significant break between a connection of at least one first string of battery modules and at least one second string of battery modules to avoid a short circuit between the modules. A break may also be required for current changes if inductances or even large inductances are in the circuit. To provide a continuous current flow from a source and/or to a load, there may be at least one third string of battery modules. A possible switching sequence with three strings of battery modules, here S1, S2 and S3 is shown in the table below.

| Step | [1] | [2] | [3] | [4] | [5] | [6] | [7] | [8] | [9] | [10] | [11] | [12] | [13] |
|---|---|---|---|---|---|---|---|---|---|---|---|---|---|
| DC | S1 | S1 | S1 | S2 | S2 | S2 | S2 | S3 | S3 | S3 | S3 | S1 | S1 |
| | | | S2 | | | | S3 | | | | S1 | | |
| AC | S2 | S3 | S3 | S3 | S3 | S1 | S1 | S1 | S1 | S2 | S2 | S2 | S2 |
| | S3 | | | | S1 | | | | S2 | | | | S3 |
| Open | | S2 | | S1 | | S3 | | S2 | | S1 | | S3 | |

The table shows 13 steps where the sequence repeats after 12 steps such that step 13 is the same as step 1. The sequence may continue periodically. The row "DC" shows which of the three strings of battery modules is connected to the DC input. The row "AC" shows which of the three strings of battery modules is connected to the AC output. The row "Open" shows which string of battery modules is not connected or open. The transition steps, where any of the strings of battery modules is open may be shorter than the other steps. For example, a transition step may take about 1s to settle a mechanical relay, whereas the other steps may take 60s each. Basically, the transition steps may be adapted to mechanical relay switching times. The switching scheme leaves all times at least one string connected to the DC input and another string connected to the AC output while at least a third string toggles between the DC input and the AC output. All three strings alternate in toggling. This may be in a fixed or any other sequence, e.g. a random sequence. Similar switching schemes may be implemented with a higher number of strings. The table below shows part of an exemplary sequence with four strings s1, S2, S3 and S4.

| Step | [1] | [2] | [3] | [4] | [5] | [6] | [7] | [8] | [9] |
|---|---|---|---|---|---|---|---|---|---|
| DC | S4 | S1 | S1 | S2 | S2 | S3 | S3 | S4 | S4 |
| | S1 | | S2 | | S3 | | S4 | | S1 |

| | | | | | | | | | |
|---|---|---|---|---|---|---|---|---|---|
| AC | S2 | S3 | S3 | S4 | S4 | S1 | S1 | S2 | S2 |
| | S3 | | S4 | | S1 | | S2 | | S3 |
| Open | | S2 | | S1 | | S2 | | S1 | |
| | | S4 | | S3 | | S4 | | S3 | |

This results in a more even current distribution as always two strings can be charged and two strings can be discharged at the same time.

If the selector switch is a semiconductor switch, e.g. a MOSFET or IGBT instead of a mechanical switch, e.g. a relay, switching may be done with a comparatively high switching rate. Further, switching may be such fast, that the switchover between at least one first string of battery modules and at least one second string of battery modules is performed within the same magnitude of switching times as the normal switching within a string. Nonetheless there will be still a period of time without current flow (with interrupted current flow) with only two strings, since the control algorithms have to reset and synchronize when switching from one grid (e.g. MPPT on DC to grid synchronization on AC side).

Further, the battery storage system may be configured for a DoD limit mode in which the first string charge mode and the second string charge mode are alternatingly activated when a maximum DoD (Depth of Discharge) value is reached.

In this continuous mode it is especially beneficial if one of the at least two strings alternate with a rather high rate (rather single digit minutes than hours) so that the Depth of Discharge (DoD) which is the ratio of discharged capacity to the nominal capacity of a battery, stays low. This will increase the lifetime of the batteries in an disproportional high way. When cycling batteries with a high DoD the aging effect is strong, e.g. 1000 equivalent full cycles (EFC) at 100% DoD. Limiting the DoD to about 80% may give around 5000 EFC. Further limiting the DoD to 10% may give about 20000 EFC. EFC relates to a full charge cycle, such that a DoD with 10%, giving 20000 EFC may allow (100% / 10%) ^{∗} 20000 = 200000 cycles.

Usually, the DoD is not a degree of freedom which can be set by a control algorithm. The DoD is usually a direct result of the user (e.g. when driving a car to a certain location) or of the application (e.g. providing needed energy and therefore discharging until empty or charged again as for a smartphone). Also when using parallel battery strings it is common to have all batteries & battery strings operating at the same DoD as required by the application. It won't happen that one string will cycle at a low DoD while its neighboring string will cycles at a high DoD since that would be detrimental to the batteries in the string cycling at a high DoD.

In this invention the DoD becomes a degree of freedom, since a back to back converter coupling two different grid forms is replaced by a battery storage system.

The battery storage system may further be configured for a SoC limit mode in which the current transferred in DC input mode (108) and/or the current transferred in the AC output mode (109) are controlled, such that a SOC (State of Charge) setpoint is maintained, or a SOC setpoint is exceeded, or a SOC setpoint is underrun.

The effect on the lifetime of the batteries can be further leveraged, when the DoD cycling happens at a low SOC. The operational strategy may be to limit the SOC for as long as possible to <60% and optimally in the range of 30% or less to further reduce the aging. The strategy could be as follows:
1. In the morning (after a night without PV input) the SOC will be low. Use the sun energy to charge the batteries into the range of 20-30% SOC and feed only little to nothing into the grid.
2. Before noon the batteries should have reached the aimed for SOC. From here on feed as much as possible into the grid while reducing the SOC increase to the minimum (some SOC charge might happen, since the storage system can be used to reduce curtailment of renewable energy feed-in by storing this excess energy).
3. During evening increase the SOC to be able to serve the demand of energy during the night hours.

This can be achieved by using a prognosis tool for weather and demand so that the required energy may be estimated and/or calculated beforehand.

A method of operating a battery storage system comprising at least one group of solar modules being connected to the DC input may include the steps of:
- during periods of solar power generation above a solar power threshold: alternating between DC input mode and AC output mode in such a temporal manner, that the DoD (Depth of Discharge) of the string of battery modules stays below a DOD threshold value. The DoD threshold value may be any value below 30%, 20%, 10% or 5%. If the DoD threshold value is below 20%, the battery lifetime may be more than ten times the lifetime with 80% DoD charging cycles. In an example the string of battery modules may be charged to a State of Charge (SOC) of about 50% and in cycles charged for additional 5% SOC and then discharge again for 5% SOC. This cycle may be repeated multiple times; This works best, if all batteries of a string of battery modules have similar states of charge.
- during periods of solar power generation below or equal to the solar power threshold, e.g. when solar power generation is diminishing (e.g. in the late afternoon or with bad weather forecasts) operating in DC input mode or alternating between DC input mode and AC output mode such that the SOC (State of Charge) of the string of battery modules (110) reaches and stays above a SOC minimum value. The SOC minimum value may define a comparatively high SOC for this state (e.g. 80-100%) so that the AC output can be provided with energy for a prolonged time.

Ina an embodiment, the battery storage system may be configured for operating in DoD limit mode with a first DoD limit during periods of solar power generation by the at least one group of solar modules above a solar power threshold. Further, the battery storage system may be configured for operating in SoC limit mode such that a SOC setpoint is maintained or exceeded during periods of solar power generation by the at least one group of solar modules (410) above a solar power threshold. The battery storage system may also be configured for operating in DoD limit mode with a DoD limit above the first DoD limit.

### Description of Drawings

In the following the invention will be described by way of example, without limitation of the general inventive concept, on examples of embodiment with reference to the drawings.
Figure 1 shows a first embodiment of a battery storage system.
Figure 2 shows the embodiment with solar modules and power grid.
Figure 3 shows a block diagram of a battery storage system in DC input mode.
Figure 4 shows a block diagram of a battery storage system in AC output mode.
Figure 5 shows a block diagram of a battery storage system.
Figure 6 shows a block diagram of a battery storage system with a secondary selector switch.
Figure 7 shows a block diagram of an embodiment with a series inductor.
Figure 8 shows a block diagram of an embodiment with two series inductors.
Figure 9 shows a block diagram of a more complex embodiment.
Figures 10 to 12 show details of a battery module.
Figure 13 shows a curve of battery life vs. discharge depth of a battery.

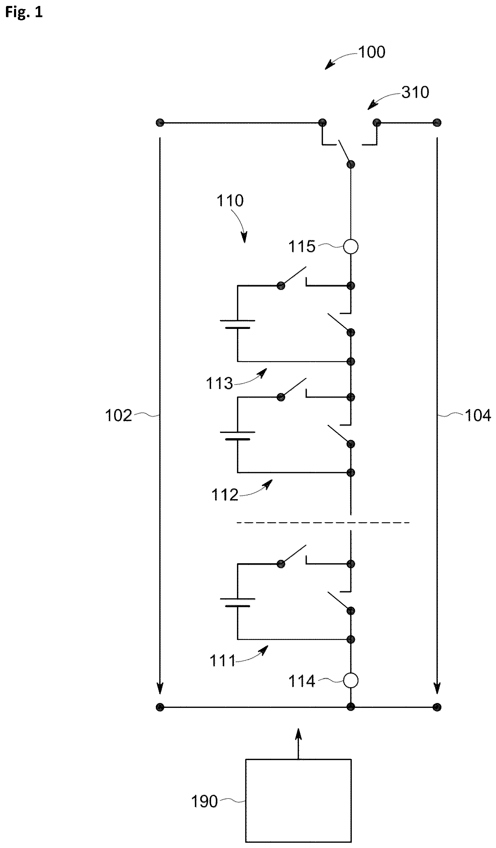

In figure 1 a first embodiment of a battery storage system 100 is shown. The battery storage system 100 includes at least one string of battery modules 110 connected to a selector switch 310. The selector switch 310 may have at least two switching states. In a first state the string of battery modules 110 is connected to a DC input 102 and in a second state 314, the string of battery modules 110 is connected to an AC output 104.

The string of battery modules 110 includes a plurality of battery modules 111, 112, 113 which may be connected in series. Herein, exemplary three battery modules 111, 112, 113 are shown. Instead, there may be at least two battery modules or any higher number of battery modules. Each battery module may include at least a battery, one switch for disconnecting the battery and another switch for bridging/bypassing the battery module 111, 112, 113. In this figure, a first string of battery modules 110 includes three battery modules 111, 112, 113 which are connected in series. The first string of battery modules 110 may have a second end 114 connected to the first battery module 111 and a first end 115 connected to the last battery module of the string which is the third battery module 113 shown in this embodiment.

In this embodiment, the string of battery modules 110 may deliver power at the first end 115 and the second end 114. The string of battery modules 110 may also be charged through the first end 115 and the second end 114.

The string of battery modules 110 may be configured to provide different output voltages by connecting any number of batteries in series. If no battery is connected, then the output voltage may be zero. There may also be a high impedance state, if at least one battery module is in an open state.

The battery storage system 100 has at least two operating modes. In a DC input mode, the selector switch 310 is in its first state and the string of battery modules 110 is configured for receiving DC electrical energy with charging the battery modules 111, 112, 113. Further, in an AC output mode, the selector switch 310 is in its second state 314 and the string of battery modules 110 is configured for generating an AC output 104 with discharging the battery modules 111, 112, 113.

A module controller 190 may be provided to control the switches and/or to communicate with external devices (not shown). The module controller 190 may also include at least one sensor for at least one battery state, e.g. SOH, SOC, Voltage, Current, temperature and/or environmental state, e.g. temperature, presence of battery.

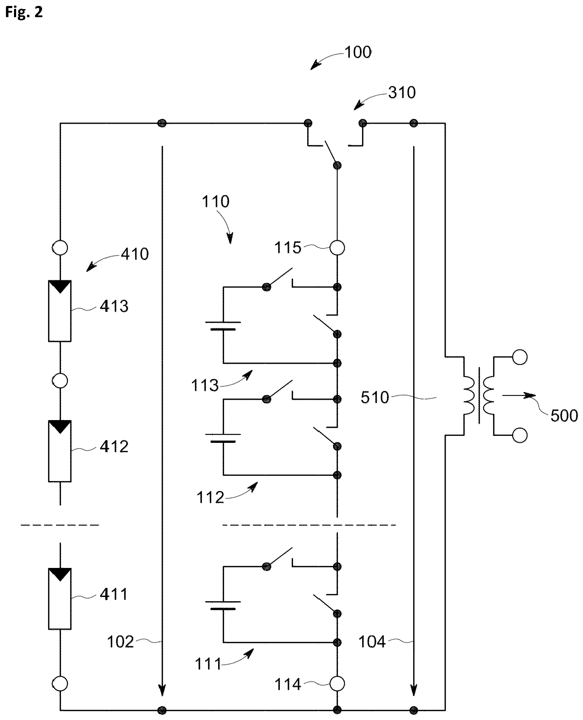

Fig. 2 shows the embodiment with solar modules 411, 412, 413 and power grid 500. Here, at least one group of solar modules 410 is connected to the DC input 102 and a power grid 500 is connected via an optional transformer 510 to the AC output 104.

The group of solar modules 410 may include a plurality of solar cells, which may be arranged on solar panels or solar modules. Multiple solar cells may be connected in series to obtain a higher voltage and/or connected in parallel or a combination thereof. In this figure, three solar modules 411, 412, 413 are shown. There may be any other number of solar modules. The number of solar modules 411, 412, 413 may differ from the number of battery modules 111, 112, 113. Multiple solar modules 411, 412, 413 form a group of solar modules 410.

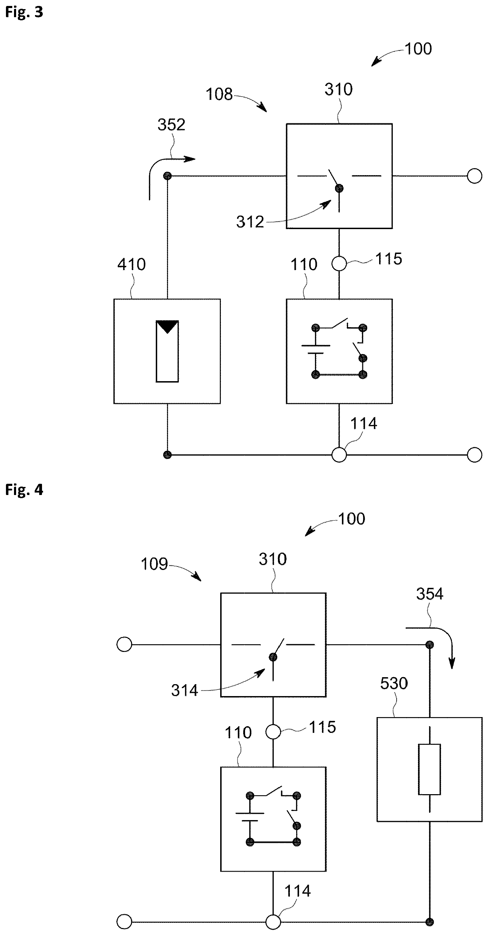

Fig. 3 shows a block diagram of a battery storage system 100 including at least one group of solar modules 410 in DC input mode 108. Here, the selector switch 310 is in its first switching state 312 and configured to connect the string of battery modules 110 to a group of solar modules 410.

In the DC input mode, the selector switch 310 is in the first state 312 connecting the string of battery modules 110 to the group of solar modules 410, enabling a first flow of energy 352 from solar modules 411, 412, 413 to the battery. Here, the battery modules are charged by the solar modules 411, 412, 413. This may be done by selecting a voltage at the string of battery modules 110, which is lower than the open-circuit-voltage of the group of solar modules 410. By adjusting the voltage at the string of battery modules 110 a MPP (Maximum Power Point) tracking can be achieved. For fine adjustment at least one battery module may be operated in PWM (Pulse Width Modulation) mode. Further, at least one inductor may be connected in series to the string of battery modules 110, e.g. at the second end 114 and/or the first end 115 of the string. This may smooth input and/or output current.

Fig. 4 shows a block diagram of a battery storage system 100 including at least one load 530 in AC output mode 109. Here, the selector switch 310 is in its second switching state 314 and configured to connect the string of battery modules 110 to a load 530.

Here, in an AC output mode, the selector switch 310 is in the second state connecting the string of battery modules 110 to the load 530 which may be a power grid 500 e.g. via a transformer 510. In this AC output mode, there may be a second flow of energy 354 from the string of battery modules 110 to the load 530 or power grid 500. The string of battery modules 110 may be configured to deliver an AC output 104 adapted to the voltage of the power grid 500. If the power grid 500 is a DC network, the string of battery modules 110 may be configured to deliver a DC output.

The selector switch 310 may further have an open state, where the string of battery modules 110 is disconnected. Normally, the selector switch 310 has no state in which the group of solar module 410s is connected to the power grid 500.

There may be an AC input mode, in which the selector switch 310 is in the second state connecting the string of battery modules 110 to the power grid 500 and the string of battery modules 110 is configured for charging of the batteries from the power grid 500.

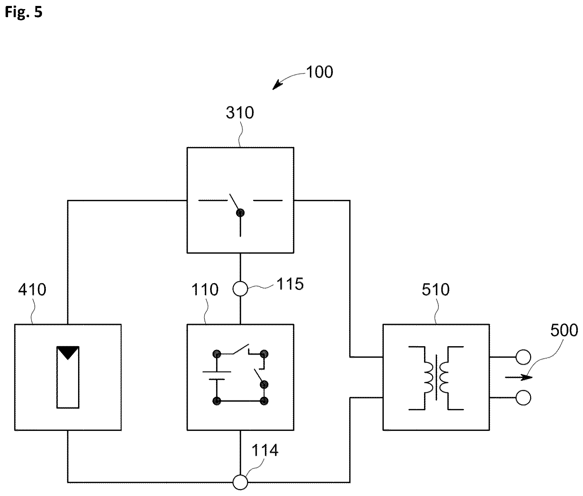

Fig. 5 shows a block diagram of a battery storage system 100. A string of battery modules 110 includes a plurality of battery modules 111, 112, 113 connected by switches. The string of battery modules 110 is connected to a selector switch 310, which may connect the string of battery modules 110 to either a group of solar modules 410 or a power grid 500 which may be connected via a transformer 510.

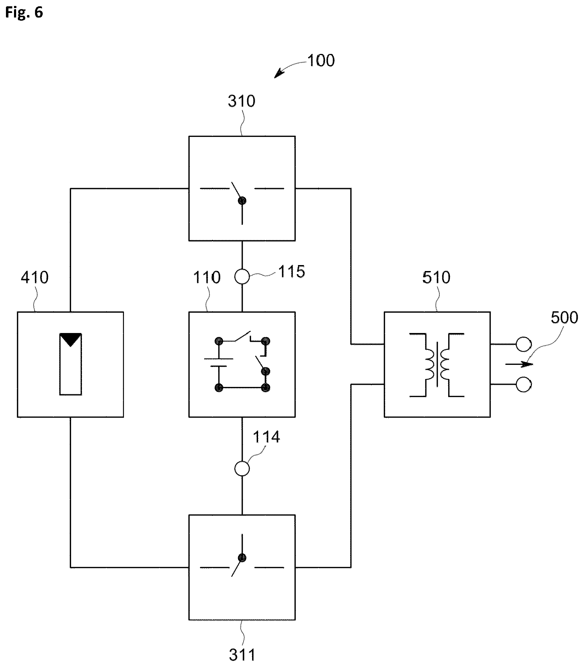

Figure 6 shows a block diagram of a battery storage system 100 with a secondary selector switch 311. The selector switch 310 and the secondary selector switch 311 are synchronized, such that they either both connect the string of battery modules 110 to the DC input 102 or to the AC output 104. This switch configuration provides a full isolation between the AC output 104 and the DC input 102. At least one of the selector switches 310, 311 may include a relay.

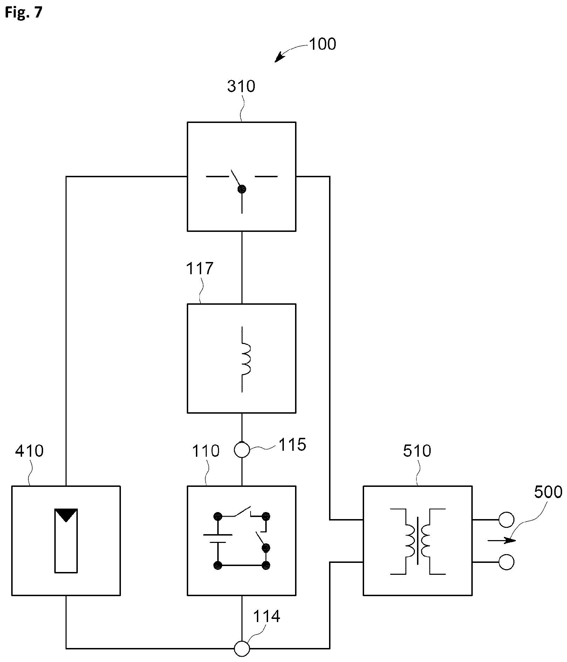

Figure 7 shows a block diagram of an embodiment with a series inductor 117 in series to the first string of battery modules 110. This series inductor may reduce current ripple, which may be specifically useful in a PWM operation of the first string of battery modules 100.

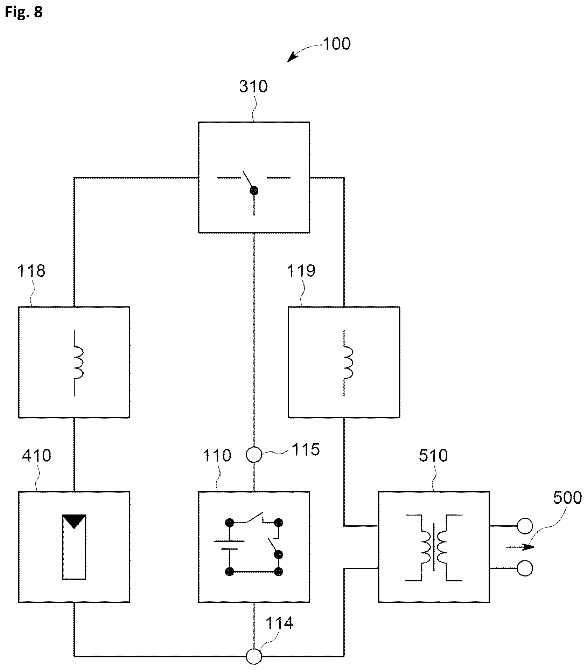

Figure 8 shows a block diagram of an embodiment with two series inductors. Here, a series inductor at DC input 118 and a series inductor at AC output 119 are provided. This allows to adapt the series inductors for specific requirements at the AC output and the DC input. When e.g. at the DC input a lower voltage level with higher currents is provided, a different inductance may be required compared to an AC output with higher voltage levels and lower currents.

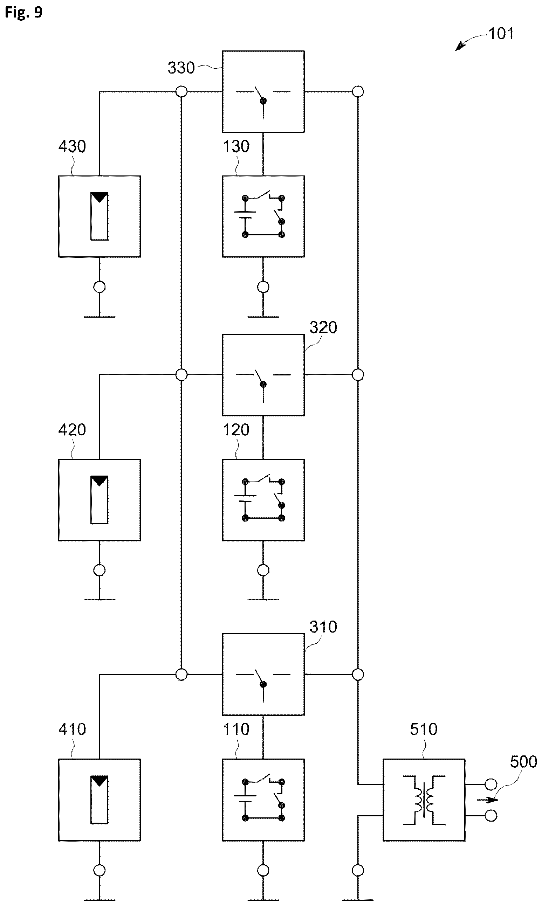

Fig. 9 shows a block diagram of a more complex embodiment. Here, three strings of battery modules 110, 120, 130 are provided, each being connected to a selector switch 310, 320, 330. All selector switches 310, 320, 330 are connected in parallel to three groups of solar modules 410, 420, 430 and further in parallel to the power grid 500 or transformer 510. In this embodiment, all strings of battery modules 110, 120, 130 and groups of solar modules 410, 420, 430 share a common ground. There may be any number of strings of battery modules 110, 120, 130 with selector switches 310, 320, 330 and any number of groups of solar modules 410, 420, 430. The strings of battery modules 110, 120, 130 may be in different operating modes. For example, one string of battery module 110 may be in DC input mode, wherein another string of battery module 120 may be in AC output mode. It is also possible to transfer energy between the string of battery modules 110, 120, 130 via the grid connection when one module is in AC output mode and another module is in AC input mode. Exemplarily, with two strings, there may be a first string charge mode which may be operating the first string of battery modules 110 and a first selector switch 310 in the DC input mode 108, while operating a second string of battery modules 120 and a second selector switch 320 in the AC output mode 109. A second string charge mode may be operating the first string of battery modules 110 and the first selector switch 310 in the AC output mode 109, while operating the second string of battery modules 120 and the second selector switch 320 in the DC input mode 108. There may be any other combination of charging and discharging strings.

Further, the battery storage system 100 may be configured for a DoD limit mode in which the first string charge mode and the second string charge mode are alternatingly activated when a maximum DoD (Depth of Discharge) value is reached.

Further three strings of battery modules may be synchronized together in AC output mode to provide a three phase output.

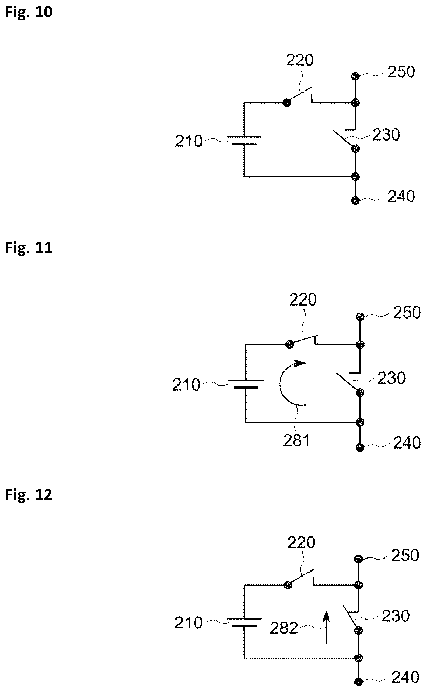

Figures 10 to 12 show details of a battery module. Each of the previously shown individual battery modules 111-113 may have the same or a similar structure. A battery module may include a battery 210. Such a battery 210 may be any source of electrical DC power. Normally, such a battery 210 may be based on a rechargeable technology, like LiPo, LiFe, Li-Ion, NiCd, NiMH. It may also include a fuel cell. The battery module may further include a series switch 220 which may be connected in series to the battery 210, and which may be configured to connect or to disconnect the battery 210 for providing a disconnected state in which the battery 210 is isolated from other batteries. If the series switch 220 is closed, the battery 210 is in a connected state. The battery 210 together with the series switch 220 may be connected between a first module connector 240 and a second module connector 250. In the embodiment shown, the positive pole (+) of a battery 210 is connected to the second module connector 250 whereas the negative (-) pole of a battery 210 is connected to the first module connector 240. There may further be a parallel switch 230 which may also be connected between the first module connector 240 and the second module connector 250. The parallel switch 230 may be configured to provide a short-circuit between the first module connector 240 and the second module connector 250 in a closed state which is called the bypass state herein. When the parallel switch 230 is closed, the series switch 220 may be opened to avoid a short-circuit of the battery 210. The battery module may further be configured to provide an open state, where the series switch 220 and the parallel switch 230 are open. In such a state, no current can flow through the battery module and therefore through the string in which the battery module is integrated. This means, that the string is disconnected from the other strings in the battery storage system 100.

Summarizing, there may be three different states of the battery modules, a connected state, a bypass state and an open state.

For controlling the switches, a module controller may be provided.

Fig. 10 shows an open switching state of battery modules in detail. The series switch 220 and the parallel switch 230 are open.

Fig. 11 shows a connected switching state of battery modules in detail. The series switch 220 is closed and the parallel switch 230 is open. This allows current to flow in direction 281 if the battery 210 is discharged. For charging the battery 210, the current is flowing in an opposite direction.

Fig. 12 shows a bypass switching state of battery modules in detail. The series switch 220 is open and the parallel switch 230 is closed. This may allow current to flow in a direction 282 or opposite thereto.

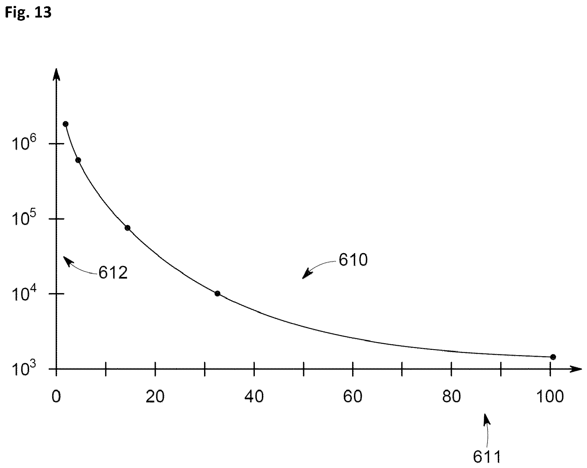

Fig. 13 shows a curve 610 of battery life vs. discharge depth of a battery, e.g. a LiPo battery. The horizontal axis 611 shows the relative discharge depth in percent from 0% to 100%. The vertical axis 612 shows the battery life in number of equivalent full cycles (EFC) from 10E3 at the bottom to 10E6 at the top. The curve shows an exponential increase in the number of EFC with decreasing the discharge depth. The total energy stored in a battery during ist useful life increases with decreasing discharge depth due to the strong increase in the number of charge cycles with decreasing the discharge depth.

### List of reference numerals

- 100: battery storage system
- 102: DC input
- 104: AC output
- 108: DC input mode
- 109: AC output mode
- 110: first string of battery modules
- 111 - 113: battery modules with switches of first string of battery modules
- 114: second end of first string
- 115: first end of first string
- 117: series inductor at end of string of battery modules
- 118: series inductor at DC input
- 119: series inductor at AC output
- 120: second string of battery modules
- 130: third string of battery modules
- 190: controller
- 210: battery
- 220: series switch
- 230: parallel switch
- 240: first module connector
- 250: second module connector
- 281: current direction - battery connected
- 282: current direction - short circuit
- 310: selector switch
- 311: secondary selector switch
- 312: first state
- 314: second state
- 320: second selector switch
- 330: third selector switch
- 352: first flow of energy
- 354: second flow of energy
- 410: first group of solar modules
- 411-413: solar modules of first group
- 420: second group of solar modules
- 430: third group of solar modules
- 500: power grid
- 510: transformer
- 530: load
- 610: curve of battery life vs discharge depth
- 611: percent of discharge depth
- 612: battery life in number of equivalent full cycles

## Claims

1. A battery storage system (100) including at least a first string of battery modules (110), and a second string of battery modules (120),
each string of battery modules (110, 120) comprising a plurality of battery modules (111 - 113) forming a multilevel converter,
the first string of battery modules (110) being connected to a first selector switch (310), the second string of battery modules (120) being connected to a second selector switch (320),
each selector switch (310, 320) comprising at least two switching states (312, 314), wherein in a first state (312) the connected string of battery modules (110, 120) is configured to be connected to a DC input (102) and in a second state (314), the connected string of battery modules (110, 120) is configured to be connected to an AC output (104),
each of the strings of battery modules (110, 120) being configured for at least two operating modes including a DC input mode (108) and an AC output mode (109):
- in the DC input mode (108), the string of battery modules (110, 120) is configured for receiving DC electrical energy with charging the battery modules (111 - 113), and the connected selector switch (310, 320) is in its first state (312), and
- in the AC output mode (109), the string of battery modules (110) is configured for generating an AC output (104) with discharging the battery modules (111 - 113), and the connected selector switch (310, 320) is in its second state (314),
wherein
the battery storage system (100) is configured for a first string charge mode and a second string charge mode,
- the first string charge mode comprises operating the first string of battery modules (110) and the first selector switch (310) in the DC input mode (108), while operating the second string of battery modules (120) and the second selector switch (320) in the AC output mode (109),
- the second string charge mode comprises operating the first string of battery modules (110) and the first selector switch (310) in the AC output mode (109), while operating the second string of battery modules (120) and the second selector switch (320) in the DC input mode (108),
**characterized in, that**
the battery storage system (100) being configured for a DoD limit mode in which the first string charge mode and the second string charge mode are alternatingly activated when a maximum DoD (Depth of Discharge) value is reached.

2. The battery storage system according to claim 1, further being configured for a SoC limit mode in which the current transferred in DC input mode (108) and/or the current transferred in the AC output mode (109) are controlled, such that
a SOC (State of Charge) setpoint is maintained, or
a SOC setpoint is exceeded, or
a SOC setpoint is underrun.

3. The battery storage system according to any of the previous claims,
wherein at least one group of solar modules (410) is connected to the DC input (102).

4. The battery storage system according to claim 3, further being configured for operating in DoD limit mode with a first DoD limit during periods of solar power generation by the at least one group of solar modules (410) above a solar power threshold.

5. The battery storage system according to claim 3 or 4, further being configured for operating in SoC limit mode such that a SOC setpoint is maintained or exceeded during periods of solar power generation by the at least one group of solar modules (410) above a solar power threshold.

6. The battery storage system according to claim 5, further being configured for operating in DoD limit mode with a DoD limit above the first DoD limit.

7. The battery storage system according to any of the previous claims, wherein at least one traction power network is connected to the AC output (104) by means of at least one optional transformer (510), wherein the frequency of the traction power network may be at 16,7 Hz with a tolerance of 10%.

8. The battery storage system according to any of the previous claims,
wherein each battery module comprises:
at least one battery (210),
at least one series switch (220) being connected in series to the battery (210) and being configured to connect or to disconnect the battery (210) for providing a connected or disconnected state,
at least one parallel switch (230) being connected parallel to the at least one battery (210) and the at least one series switch (220) and being configured to short-circuit the module for providing a bypass state.

9. The battery storage system according to any of the previous claims,
wherein the battery storage system (100) includes at least one transformer (510) connected to the AC output (104).

10. The battery storage system according to any of the previous claims,
wherein the battery storage system (100) is configured for a third operating mode, the AC input mode
whereby
in the AC input mode, the selector switch (310) is in its second state (314) and the string of battery modules (110) is configured for receiving AC electrical energy from the AC output (104) and charging the battery modules (111-113).

11. The battery storage system according to any of the claims 2 to 10 wherein a controller (190) is provided which continuously configures in the DC input mode (108), the string of battery modules (110) such that the number of batteries (210) connected in the string of battery modules (110) is adapted to provide a voltage matching to the Maximum Power Point (MPP) of the at least one group of solar modules (410) connected to the DC input (102).

12. A method of operating a battery storage system comprising a string of battery modules (110), forming a multilevel converter and being connected to a selector switch (310),
the method including the substeps of:
- in a DC input mode (108), the selector switch (310) connecting the string of battery modules (110) to a DC input (102), and the string of battery modules (110) receiving DC electrical energy with charging the battery modules (111 -113);
- in an AC output mode (109), the selector switch (310) connecting the string of battery modules (110) to an AC output (104), and the string of battery modules (110) generating an AC output (104) with discharging the battery modules (111 - 113)
the method further including the steps of:
- in a first string charge mode comprises operating the first string of battery modules (110) and the first selector switch (310) in the DC input mode (108), while operating the second string of battery modules (120) and the second selector switch (320) in the AC output mode (109),
- in a second string charge mode comprises operating the first string of battery modules (110) and the first selector switch (310) in the AC output mode (109), while operating the second string of battery modules (120) and the second selector switch (320) in the DC input mode (108),
and alternatingly activating the first string charge mode and the second string charge mode by switching between modes, when in one mode a maximum DoD (Depth of Discharge) value is reached.

13. The method of operating a battery storage system according to claim 12, connecting at least one group of solar modules (410) to the DC input (102), and
during periods of solar power generation above a solar power threshold:
alternating between DC input mode and AC output mode in such a temporal manner, that the DoD (Depth of Discharge) of the string of battery modules (110) stays below a DoD threshold value;
during periods of solar power generation below or equal to the solar power threshold: operating in DC input mode or alternating between DC input mode and AC output mode such that the SOC (State of Charge) of the string of battery modules (110) reaches and stays above a SOC minimum value.
